# FASCICULE DE BREVET EUROPEEN

(11) **EP 2 015 418 B1**
(45) Date de publication et mention de la délivrance du brevet: **12.06.2013**
(21) Numéro de dépôt: 08354043.5
(22) Date de dépôt: 23.06.2008
(51) Int. Cl.: H02G 3/14

(54) **Boîtier électrique encastrable**
Unterputzdose
Embeddable electrical case

(30) Priorité: 10.07.2007 FR 0704992
(43) Date de publication de la demande: 14.01.2009
(73) Titulaire: Alombard, 45161 Olivet Cedex (FR)
(72) Inventeur: Chauveau, Bruno, 38050 Grenoble Cedex 09 (FR); Tanchoux, Yannick, 38050 Grenoble Cedex 09 (FR)
(74) Mandataire: Tripodi, Paul

(56) Documents cités:
- EP-A- 1 458 074
- DE-A1- 2 410 963
- GB-A- 800 174
- GB-A- 814 682
- GB-A- 1 294 659
- US-A- 1 672 683

## Description

### DOMAINE TECHNIQUE DE L'INVENTION

L'invention est relative à un boîtier électrique encastrable destiné à fixer un appareillage électrique dans une cloison creuse suivant les caractéristiques du préambule de la revendication 1.

### ETAT DE LA TECHNIQUE

Un boîtier d'encastrement pour appareillage électrique comporte généralement une première paire de moyens de fixation du boîtier dans la cloison, et des seconds moyens de fixation dudit appareillage dans le boîtier.

Les premiers moyens de fixation sont généralement constitués d'une vis et d'une griffe taraudée qui, lorsque la dite vis est serrée, vient se bloquer sur l'arrière de la cloison; le boîtier étant lui-même bloqué sur la face avant de la cloison par une collerette faisant saillie du pourtour ouvert dudit boîtier.

Les seconds moyens de fixation de l'appareillage sur le boîtier sont généralement constitués d'une vis venant s'engager dans un trou taraudé du boîtier.

Une des difficultés principales de la pose de l'appareillage dans ce type de boîtier est l'ajustage angulaire de l'appareillage selon une direction horizontale (ou verticale) pour ainsi obtenir un montage esthétiquement convenable.

En effet, le boîtier n'est pas toujours fixé de manière à pouvoir fixer l'appareillage convenablement et peut donc demander le démontage et le repositionnement du boîtier, ce qui est une perte de temps.

Pour palier à cet inconvénient, de nombreux boîtiers notamment décrits dans le document EP 1 458 074 sont munis de trous supplémentaires pour permettre de changer la position des vis de fixation de l'appareillage électrique sans qu'il soit nécessaire de démonter le boîtier.

D'autre part, l'appareillage électrique est généralement muni pour chacun de ses moyens de fixation, d'un trou allongé permettant l'ajustement angulaire de l'appareillage électrique d'une part, le trou allongé comportant à l'une de ces extrémités une partie plus large permettant le passage de la tête de la vis sans qu'il soit nécessaire d'enlever la vis complètement d'autre part. Il faut néanmoins dévisser la vis complètement lorsque l'on veut changer la position de cette dernière dans un boîtier muni de plusieurs trous taraudés.

### EXPOSE DE L'INVENTION

L'invention vise donc à remédier aux inconvénients de l'état de la technique, de manière à proposer un dispositif de détection dont le seuil de détection ne soit pas dépendant du point d'application de la force d'actionnement.

Selon l'invention, les seconds moyens de fixation comportent au moins un écrou pouvant se déplacer dans une cage, la cage ayant un orifice accessible depuis la première extrémité ouverte, l'orifice de passage étant destiné au passage d'une vis de maintien.

De préférence, les seconds moyens de fixation comportent deux écrous.

De préférence, les deux écrous sont placés dans des positions diamétralement opposées.

Selon un mode de réalisation particulier, chaque écrou est placé dans une cage indépendante comportant respectivement un orifice.

Avantageusement, chaque orifice comporte un guide de positionnement de la vis de maintien selon au moins deux positions de maintien, le guide comportant au moins deux trous de diamètre sensiblement égale à celui de la vis de maintien et étant reliés par une échancrure de moindre largeur matérialisant un point dur entre chaque position de maintien de la vis de maintien.

De préférence, chaque échancrure a la forme d'un croissant dont le rayon est sensiblement égal à celui du cylindre de l'ensemble monobloc

De préférence, chaque écrou est guidé latéralement par deux ailes garantissant une protection contre la pénétration des corps solides.

Selon un mode de réalisation particulier, les premiers moyens de fixation comportent au moins deux brides articulées, chaque bride étant actionnée en translation et/ou en rotation par une vis de fixation pour fixer le boîtier dans la cloison creuse.

De préférence, l'ensemble monobloc comporte au moins une paroi comprenant au moins un opercule détachable.

### BREVE DESCRIPTION DES FIGURES

D'autres avantages et caractéristiques ressortiront plus clairement de la description qui va suivre d'un mode particulier de réalisation de l'invention, donné à titre d'exemple non limitatif, et représenté aux dessins annexés sur lesquels :
- la figure 1 représente, une vue en perspective d'un boîtier électrique encastrable selon un mode de réalisation de l'invention dans une première position de fixation ;
- la figure 2 représente une vue de détail en perspective des seconds moyens de fixation du boîtier électrique encastrable selon la figure 1 ;
- la figures 3 représente, une vue en perspective d'un boîtier électrique encastrable selon un mode de réalisation de l'invention dans une seconde position de fixation ;
- la figure 4 représente une vue de détail en perspective des seconds moyens de fixation du boîtier électrique encastrable selon la figure 3 ;
- la figures 5 représente, une vue en perspective d'un boîtier électrique selon un mode de réalisation de l'invention dans une troisième position de montage ;
- la figure 6 représente une vue de détail en perspective des seconds moyens de fixation du boîtier électrique encastrable selon la figure 5 ;
- la figure 7 représente une vue de détail en coupe des seconds moyens de fixation d'un boîtier électrique selon un mode de réalisation de l'invention.

### DESCRIPTION DETAILLEE D'UN MODE DE REALISATION

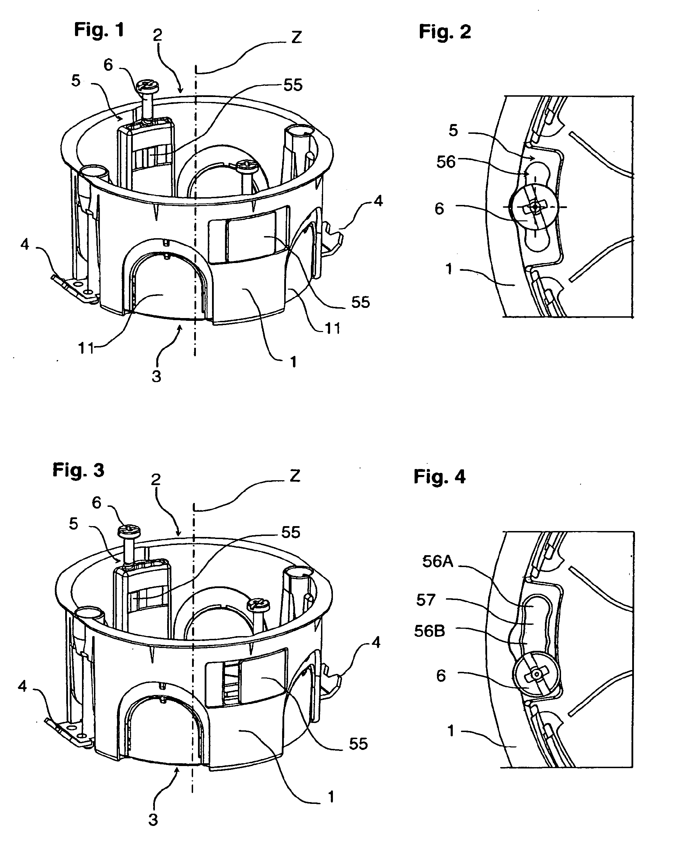

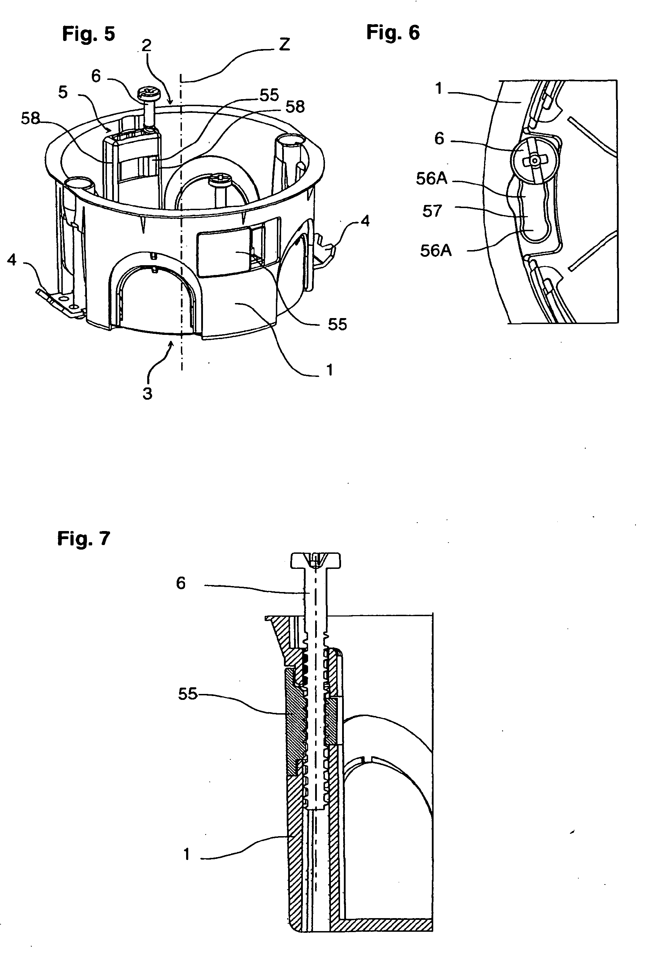

Comme représenté sur les figures 1, 3 et 5, le boîtier électrique encastrable destiné à fixer un appareillage électrique dans une cloison creuse, comprend un ensemble monobloc 1 s'étendant selon un axe longitudinal Z. L'ensemble monobloc a une première extrémité ouverte 2 et une seconde extrémité 3 de préférence fermée par un fond. Selon un mode de réalisation particulier de l'invention, l'ensemble monobloc 1 a de préférence une forme cylindrique. L'ensemble monobloc 1 comporte au moins une paroi comprenant au moins un opercule détachable 11. Le retrait d'un opercule détachable permet notamment le passage de fils électrique ou de gaine comprenant des fils électriques. Selon un mode réalisation de l'invention, le boîtier électrique encastrable comporte quatre opercules détachables répartis uniformément sur la paroi de l'ensemble monobloc 1.

Le boîtier électrique encastrable comprend des premiers moyens de fixation 4 destinés à fixer le boîtier électrique dans la cloison creuse. Selon un mode de réalisation de l'invention, les premiers moyens de fixation 4 comportent au moins deux brides articulées. Chaque bride peut être actionnée en translation et/ou en rotation par une vis de fixation non représentée.

Le boîtier électrique encastrable comprend des seconds moyens de fixation 5 placés sur la périphérie de l'ensemble monobloc 1. Ces seconds moyens de fixation5 sont destinés à maintenir un appareillage électrique à l'intérieur dudit ensemble. Selon une mode de réalisation de l'invention, les seconds moyens de fixation 5 sont mobiles autour de l'axe longitudinal Z de l'ensemble monobloc 1. En outre, ils sont accessibles depuis la première extrémité ouverte 2 dudit ensemble.

Les seconds moyens de fixation 5 comportent au moins un écrou 55 pouvant se déplacer dans une cage. Comme représenté sur les figures 1-6, la cage a un orifice 56 accessible depuis la première extrémité ouverte 2 de l'ensemble monobloc. L'orifice 56 de passage est destiné au passage d'une vis de maintien 6. Pour un bon maintien d'un appareillage électrique dans le boîtier électrique encastrable les seconds moyens de fixation 5 comportent de préférence deux écrous 55 recevant respectivement une vis de maintien 6. Pour une meilleure répartition des efforts de serrage, les deux écrous 55 sont placés dans des positions diamétralement opposées.

Selon un mode particulier de réalisation de l'invention, chaque écrou 55 est placé dans une cage indépendante comportant respectivement un orifice 56.

Comme représenté sur les figures 2, 4 et 6, chaque orifice 56 comporte un guide de la vis de maintien 6 selon au moins deux positions de maintien. Le guide comporte alors au moins deux trous 56A de diamètre sensiblement égale à celui de la vis de maintien 6. Lesdits trous 56A sont reliés par une échancrure 57 de moindre largeur matérialisant un point dur entre chaque position de maintien de la vis de maintien 6.

Selon un mode particulier de réalisation de l'invention, chaque échancrure 57 a la forme d'un croissant. Le rayon du croissant peut être sensiblement égal à celui du cylindre de l'ensemble monobloc lorsque ce dernier comporte une forme cylindrique.

Selon une variante de réalisation, chaque écrou 55 est guidé latéralement par deux ailes 58 garantissant une protection contre la pénétration des corps solides. Cette protection est efficace quelle que soit la position dudit écrou dans la cage.

Selon une variante de réalisation, le boîtier comporte un ensemble monobloc de forme parallélépipédique.

Le procédé de montage d'un appareillage électrique dans un boîtier électrique encastrable selon l'invention est le suivant. Le boîtier électrique encastrable selon l'invention est inséré et fixé dans une cavité réalisée dans la cloison creuse. Le boîtier électrique encastrable est fixé par les premiers moyens de fixation, notamment avec deux brides de fixation 4. La première extrémité 2 ouverte de l'ensemble monobloc 1 est tournée vers de la cavité, autrement dit vers l'installateur dudit boîtier. La cavité réalisée dans la cloison comporte des dimensions sensiblement égales ou légèrement supérieures à celles de l'ensemble monobloc 1. Un ou plusieurs fils électriques, notamment protégés par une gaine sont passés à travers une ouverture libérée après le retrait d'un opercule détachable 11. Le ou les fils électriques sont contenus dans la cloison. Un appareillage électrique est ensuite connecté aux fils électriques accessibles dans le boîtier électrique encastrable. L'appareillage électrique comprenant traditionnellement une façade comportant au moins un trou de passage. Ledit au moins un trou est traversé par une vis de maintien 6. Cette vis de maintien 6 est vissée partiellement dans un écrou 55 de l'ensemble monobloc 1. L'installateur fait alors subir à l'appareillage, la vis de maintien 6 et à l'écrou 55 une rotation autour de l'axe longitudinal Z de l'ensemble monobloc. L'angle de rotation maximal est directement dépendant de la taille de cage comportant l'écrou 55 et de la taille de l'orifice 56. Cette rotation permet d'orienter de manière précise l'appareillage électrique par rapport à la cloison. La vis de maintien 6 est ensuite visée dans l'écrou 55 afin de serrer l'appareillage électrique dans le boîtier électrique encastrable et de le positionner de manière rigide vis à vis de la cloison.

Selon un mode préférentiel de montage, plusieurs vis de maintien 6 sont utilisées concomitamment et le serrage de l'appareillage électrique est réalisé en plusieurs endroits.

## Revendications

1. Boîtier électrique encastrable destiné à fixer un appareillage électrique dans une cloison creuse, comprenant
- un ensemble monobloc (1) s'étendant selon un axe longitudinal (Z) et ayant une première extrémité ouverte (2) et une seconde extrémité (3),
- des premiers moyens de fixation (4) destinés à fixer le boîtier électrique dans la cloison creuse,
- des seconds moyens de fixation (5) placés sur la périphérie de l'ensemble monobloc (1), lesdits seconds moyens étant mobiles autour de l'axe longitudinal (Z) de l'ensemble monobloc (1) et étant accessibles depuis la première extrémité ouverte (2),
**caractérisé en ce que**
les seconds moyens de fixation (5) destinés à maintenir un appareillage électrique à l'intérieur dudit ensemble comportent au moins un écrou (55) pouvant se déplacer dans une cage, la cage ayant un orifice (56) accessible depuis la première extrémité ouverte (2), l'orifice (56) de passage étant destiné au passage d'une vis de maintien (6).

2. Boîtier électrique encastrable selon la revendication 1, **caractérisé en ce que** les seconds moyens de fixation (5) comportent deux écrous (55).

3. Boîtier électrique encastrable selon la revendication 2, **caractérisé en ce que** les deux écrous (55) sont placés dans des positions diamétralement opposées.

4. Boîtier électrique encastrable selon l'une des revendications 2 ou 3, **caractérisé en ce que** chaque écrou (55) est placé dans une cage indépendante comportant respectivement un orifice (56).

5. Boîtier électrique encastrable selon l'une quelconque des revendications 2 à 4, **caractérisé en ce que** chaque orifice (56) comporte un guide de positionnement de la vis de maintien (6) selon au moins deux positions de maintien, le guide comportant au moins deux trous (56A) de diamètre sensiblement égale à celui de la vis de maintien (6) et étant reliés par une échancrure (57) de moindre largeur matérialisant un point dur entre chaque position de maintien de la vis de maintien (6).

6. Boîtier électrique encastrable selon la revendication 5, **caractérisé en ce que** chaque échancrure (57) a la forme d'un croissant dont le rayon est sensiblement égal à celui du cylindre de l'ensemble monobloc

7. Boîtier électrique encastrable selon l'une quelconque des revendications précédentes 2 à 6, **caractérisé en ce que** chaque écrou (55) est guidé latéralement par deux ailes (58) garantissant une protection contre la pénétration des corps solides.

8. Boîtier électrique encastrable selon l'une des revendications précédentes, **caractérisé en ce que** les premiers moyens de fixation (4) comportent au moins deux brides articulées, chaque bride étant actionnée en translation et/ou en rotation par une vis de fixation pour fixer le boîtier dans la cloison creuse.

9. Boîtier électrique encastrable selon l'une des revendications précédentes, **caractérisé en ce que** l'ensemble monobloc (1) comporte au moins une paroi comprenant au moins un opercule détachable (11).

## Patentansprüche

1. Hohlwand-Gerätedose zur Befestigung eines elektrischen Schaltgeräts in einer Hohlwand, umfassend
- ein einstückiges Formteil (1) mit einer Längsachse (Z) und einem ersten, offenen Ende (2) sowie einem zweiten Ende (3),
- erste Befestigungsmittel (4) zur Befestigung der Gerätedose in der Hohlwand,
- am Umfang des einstückigen Formteils (1) ausgebildete zweite Befestigungsmittel (5), welche zweiten Befestigungsmittel um die Längsachse (Z) des einstückigen Formteils (1) verschoben werden können und von der Seite des ersten, offenen Endes (2) her zugänglich sind,
**dadurch gekennzeichnet, dass**
die zur Halterung eines elektrischen Schaltgeräts im genannten Formteil dienenden zweiten Befestigungsmittel (5) mindestens eine verschiebbar in einem Käfig gelagerte Schraubenmutter (55) umfassen, wobei der Käfig eine Öffnung (56) aufweist, die vom ersten, offenen Ende (2) her zugänglich ist und zur Durchführung einer Halterungsschraube (6) dient.

2. Hohlwand-Gerätedose nach Anspruch 1, **dadurch gekennzeichnet, dass** die zweiten Befestigungsmittel (5) zwei Schraubenmuttern (55) umfassen.

3. Hohlwand-Gerätedose nach Anspruch 2, **dadurch gekennzeichnet, dass** die beiden Schraubenmuttern (55) diametral einander gegenüberliegend angeordnet sind.

4. Hohlwand-Gerätedose nach Anspruch 2 oder 3, **dadurch gekennzeichnet, dass** jede Schraubenmutter (55) in einem eigenen Käfig mit jeweils einer darin ausgebildeten Öffnung (56) angeordnet ist.

5. Hohlwand-Gerätedose nach irgendeinem der Ansprüche 2 bis 4, **dadurch gekennzeichnet, dass** jede Öffnung (56) eine Führung zur Positionierung der Halterungsschraube (6) in mindestens zwei Halterungsstellungen umfasst, welche Führung mindestens zwei Bohrungen (56A) umfasst, die annähernd den gleichen Durchmesser aufweisen wie die Halterungsschraube (6) und über einen Ausschnitt (57) geringerer Breite miteinander verbunden sind, der als Widerstandspunkt zwischen den beiden Halterungsstellungen der Halterungsschraube (6) wirkt.

6. Hohlwand-Gerätedose nach Anspruch 5, **dadurch gekennzeichnet, dass** jeder Ausschnitt (57) kreisbogenförmig ausgebildet ist, wobei der Kreisbogen annähernd den gleichen Durchmesser aufweist wie der Zylinder des einstückigen Formteils.

7. Hohlwand-Gerätedose nach irgendeinem der Ansprüche 2 bis 6, **dadurch gekennzeichnet, dass** jede Schraubenmutter (55) seitlich durch zwei Schenkel (58) geführt wird, die einen Schutz gegen das Eindringen von festen Fremdkörpern gewährleisten.

8. Hohlwand-Gerätedose nach einem der vorhergehenden Ansprüche, **dadurch gekennzeichnet, dass** die ersten Befestigungsmittel (4) mindestens zwei Gelenkkrallen umfassen, wobei jede Kralle durch eine Befestigungsschraube translatorisch und/oder drehwirksam betätigt wird, um die Gerätedose in der Hohlwand zu befestigen.

9. Hohlwand-Gerätedose nach einem der vorhergehenden Ansprüche, **dadurch gekennzeichnet, dass** das einstückige Formteil (1) mindestens eine Wand mit mindestens einem ausbrechbaren Plättchen (11) umfasst.

## Claims

1. A flush-mounting electric case designed to fix an electric appliance in a hollow partition, comprising
- a monoblock assembly (1) extending along a longitudinal axis (Z) and having an open first end (2) and a second end (3),
- first fixing means (4) designed for securing the electric case in the hollow partition,
- second fixing means (5) placed on the periphery of the monoblock assembly (1), said second means being movable around the longitudinal axis (Z) of the monoblock assembly (1) and being accessible via the open first end (2),
**characterized in that**
the second fixing means (5) designed to secure an electric appliance inside said assembly comprise at least one nut (55) able to move in a cage, the cage having an aperture (56) accessible via the open first end (2), the passage aperture (56) being designed for a securing screw (6) to pass through.

2. The flush-mounting electric case according to claim 1, **characterized in that** the second fixing means (5) comprise two nuts (55).

3. The flush-mounting electric case according to claim 2, **characterized in that** the two nuts (55) are placed in diametrically opposite positions.

4. The flush-mounting electric case according to one of claims 2 or 3, **characterized in that** each nut (55) is placed in an independent cage respectively comprising an aperture (56).

5. The flush-mounting electric case according to any one of claims 2 to 4, **characterized in that** each aperture (56) comprises a positioning guide of the securing screw (6) in at least two securing positions, the guide comprising at least two holes (56A) of substantially equal diameter to that of the securing screw (6) and being connected by a notch (57) of smaller width materializing a hang-up point between each securing position of the securing screw (6).

6. The flush-mounting electric case according to claim 5, **characterized in that** each notch (57) is in the shape of a crescent having a radius which is substantially equal to that of the cylinder of the monoblock assembly.

7. The flush-mounting electric case according to any one of the foregoing claims 2 to 6, **characterized in that** each nut (55) is guided laterally by two wings (58) guaranteeing protection against penetration of solid bodies.

8. The flush-mounting electric case according to any one of the foregoing claims, **characterized in that** the first fixing means (4) comprise at least two articulated flanges, each flange being actuated in translation and/or in rotation by a fixing screw to secure the case in the hollow partition.

9. The flush-mounting electric case according to any one of the foregoing claims, **characterized in that** the monoblock assembly (1) comprises at least one wall comprising at least one detachable cover (11).
